# EUROPEAN PATENT APPLICATION

(11) **EP 4 708 741 A1**
(43) Date of publication of application: **11.03.2026**
(21) Application number: 23935947.4
(22) Date of filing: 05.05.2023
(51) Int. Cl.: H04L 1/00, H04W 76/27, H04W 72/0453

(54) **INFORMATION SENDING METHOD AND APPARATUS**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2023/092385
(87) International publication number: WO 2024/229618

(57) **Abstract**

Disclosed in embodiments of the present disclosure are an information sending method and an apparatus, applicable to the technical field of communications. The method executed by a terminal device comprises: sending indication information to a network device, wherein the indication information is used for indicating a physical resource sidelink (SL) continuous listen-before-talk (LBT) failure state. According to the method provided by the present disclosure, the terminal device can be supported to report the physical resource SL continuous LBT failure state, so as to inform the network device whether a physical resource triggers an SL continuous LBT failure, thereby improving the communication efficiency of the SL communication of the terminal device, and ensuring a normal communication service.

## Description

### TECHNICAL FIELD

The disclosure relates to the field of communication technologies, and in particular to an information sending method and apparatus.

### BACKGROUND

In order to support direct communication between terminals, direct communication (also known as Sidelink, SL) has been introduced, and the interface between terminals is PC-5. According to the correspondence between the sending terminal and the receiving terminal, Sidelink supports three transmission modes, such as unicast, multicast, and broadcast.

For R18 Sidelink, it supports working on the unlicensed spectrum. Sidelink communication can utilize the unlicensed spectrum for communication. The unlicensed spectrum is open and can be effectively utilized to improve performance and speed. This scenario can be called Sidelink-U (Sidelink-Unlicensed) scenario. When the terminal sends Sidelink data on the unlicensed spectrum, it also requires Listen Before Talk (LBT). The consistent LBT mechanism is also applicable to Sidelink communication on the unlicensed spectrum.

However, there is currently a lack of effective means for reporting the SL consistent LBT failure.

### SUMMARY

Embodiments of the present disclosure provide an information sending method and apparatus, which can support a terminal to report a state of an SL consistent LBT failure on a physical resource, to inform a network device whether the physical resource triggers the SL consistent LBT failure, thereby improving a communication efficiency of the terminal for SL communication and ensuring an normal operation of communication services.

In a first aspect, embodiments of the disclosure provide an information sending method. The method is performed by a terminal, and includes: sending indication information to a network device, wherein the indication information indicates a state of a sidelink (SL) consistent listen before talk (LBT) failure on a physical resource.

In the technical solution, the terminal sends the indication information to the network device, wherein the indication information indicates the state of the SL consistent LBT failure on the physical resource. Thus, it can support the terminal to report the state of the SL consistent LBT failure on the physical resource.

In a second aspect, embodiments of the disclosure provide another information sending method. The method is performed by a network device, and includes: receiving indication information sent by a terminal, wherein the indication information indicates a state of a sidelink (SL) consistent listen before talk (LBT) failure on a physical resource.

In a third aspect, embodiments of the present disclosure provide a communication device that has some or all of the functions of the terminal in implementing the method described in the first aspect. For example, the communication device may have the functions in some or all of the embodiments of the present disclosure, or may have the function of independently implementing any of the embodiments of the present disclosure. The functions can be implemented through hardware or by executing corresponding software through hardware. The hardware or software includes one or more units or modules corresponding to the above functions.

In an implementation, the structure of the communication device may include a transceiver module and a processing module. The processing module is configured to support the communication device to perform the corresponding functions in the above method. The transceiver module is configured to support communication between the communication device and other devices. The communication device may further include a storage module. The storage module is coupled with the transceiver module and the processing module, and is configured to store necessary computer programs and data for the communication device.

In an implementation, the communication device includes: a transceiver module, configured to send indication information to a network device, wherein the indication information indicates a state of a sidelink (SL) consistent listen before talk (LBT) failure on a physical resource.

In a fourth aspect, embodiments of the present disclosure provide another communication device that has some or all of the functions of the terminal in implementing the method described in the second aspect. For example, the communication device may have the functions in some or all of the embodiments of the present disclosure, or may have the function of independently implementing any of the embodiments of the present disclosure. The functions can be implemented through hardware or by executing corresponding software through hardware. The hardware or software includes one or more units or modules corresponding to the above functions.

In an implementation, the structure of the communication device may include a transceiver module and a processing module. The processing module is configured to support the communication device to perform the corresponding functions in the above method. The transceiver module is configured to support communication between the communication device and other devices. The communication device may further include a storage module. The storage module is coupled with the transceiver module and the processing module, and is configured to store necessary computer programs and data for the communication device.

In an implementation, the communication device includes: a transceiver module, configured to receive indication information sent by a terminal, wherein the indication information indicates a state of a sidelink (SL) consistent listen before talk (LBT) failure on a physical resource.

In a fifth aspect, embodiments of the disclosure provide a communication device. The communication device includes a processor. When the processor calls a computer program in a memory, the method as described in the first aspect is performed.

In a sixth aspect, embodiments of the disclosure provide a communication device. The communication device includes a processor. When the processor calls a computer program in a memory, the method as described in the second aspect is performed.

In a seventh aspect, embodiments of the disclosure provide a communication device. The communication device includes a processor and a memory. The memory is stored with a computer program; and the processor is configured to execute the computer program stored in the memory, so that the communication device performs the method as described in the first aspect.

In an eighth aspect, embodiments of the disclosure provide a communication device. The communication device includes a processor and a memory. The memory is stored with a computer program; and the processor is configured to execute the computer program stored in the memory, so that the communication device performs the method as described in the second aspect.

In a ninth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the first aspect.

In a tenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the second aspect.

In an eleventh aspect, embodiments of the disclosure provide a communication system. The system includes the communication device as described in the third aspect and the communication device as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the ninth aspect and the communication device as described in the tenth aspect.

In a twelfth aspect, embodiments of the disclosure provide a computer-readable storage medium. The computer-readable storage medium is configured to store instructions used by the terminal. When the instructions are executed, the terminal performs the method as described in the first aspect.

In a thirteenth aspect, embodiments of the disclosure provide a computer-readable storage medium. The computer-readable storage medium is configured to store instructions used by the network device. When the instructions are executed, the network device performs the method as described in the second aspect.

In a fourteenth aspect, embodiments of the disclosure provide a computer program product including a computer program. When the computer program is running on a computer, the computer is caused to perform the method as described in the first aspect.

In a fifteenth aspect, embodiments of the disclosure provide a computer program product including a computer program. When the computer program is running on a computer, the computer is caused to perform the method as described in the second aspect.

In a sixteenth aspect, embodiments of the disclosure provide a chip system. The chip system includes at least one processor and an interface, and is configured to support the terminal to perform functions involved in the first aspect, for example, to determine or process at least one of data or information involved in the above methods. In a possible design, the chip system further includes a memory. The memory is configured to save a necessary computer program and data for the terminal. The chip system may be constituted by a chip, or may include a chip and other discrete devices.

In a seventeenth aspect, embodiments of the disclosure provide a chip system. The chip system includes at least one processor and an interface, and is configured to support the network device to perform functions involved in the second aspect, for example, to determine or process at least one of data or information involved in the above methods. In a possible design, the chip system further includes a memory. The memory is configured to save a necessary computer program and data for the network device. The chip system may be constituted by a chip, or may include a chip and other discrete devices.

In an eighteenth aspect, embodiments of the disclosure provide a computer program. When the computer program is running on a computer, the computer is caused to perform the method as described in the first aspect.

In a nineteenth aspect, embodiments of the disclosure provide a computer program. When the computer program is running on a computer, the computer is caused to perform the method as described in the second aspect.

### BRIEF DESCRIPTION OF THE DRAWINGS

In order to explain technical solutions in the embodiments of the disclosure or the related art more clearly, the drawings needed for use in the embodiments of the disclosure or in the related art will be briefly introduced below.
FIG. 1 is a diagram illustrating an architecture of a communication system according to an embodiment of the disclosure.
FIG. 2 is a schematic diagram of a format of a MAC CE according to an embodiment of the present disclosure.
FIG. 3 is a schematic diagram of a format of another MAC CE according to an embodiment of the present disclosure.
FIG. 4 is a flowchart illustrating an information sending method according to an embodiment of the disclosure.
FIG. 5 is a schematic diagram of a format of yet another MAC CE according to an embodiment of the disclosure.
FIG. 6 is a schematic diagram of a format of yet another MAC CE according to an embodiment of the disclosure.
FIG. 7 is a schematic diagram of a format of yet another MAC CE according to an embodiment of the disclosure.
FIG. 8 is a schematic diagram of a format of yet another MAC CE according to an embodiment of the disclosure.
FIG. 9 is a flowchart of another information sending method according to an embodiment of the present disclosure.
FIG. 10 is a block diagram of a terminal according to an embodiment of the present disclosure.
FIG. 11 is a block diagram of a network device according to an embodiment of the present disclosure.
FIG. 12 is a block diagram of a communication device according to an embodiment of the present disclosure.
FIG. 13 is a block diagram of a chip according to an embodiment of the present disclosure.

### DETAILED DESCRIPTION

To better understand the information sending method and apparatus disclosed in the embodiments of the present disclosure, the communication system applicable to these embodiments will first be described below.

The embodiments of the present disclosure are described in detail below, with examples of the embodiments illustrated in the accompanying drawings. Identical or similar reference numerals throughout the drawings denote identical or similar elements or elements with identical or similar functions. The embodiments described with reference to the drawings are exemplary and intended for illustrative purposes of the present disclosure, not as limitations thereof. In the description of the present disclosure, unless otherwise specified, "/" denotes an "or" relationship. For example, A/B may represent either A or B. The term "and/or" is merely a way to describe the association between objects, indicating three possible relationships: for instance, A and/or B may represent the cases where A exists alone, both A and B exist simultaneously, or B exists alone.

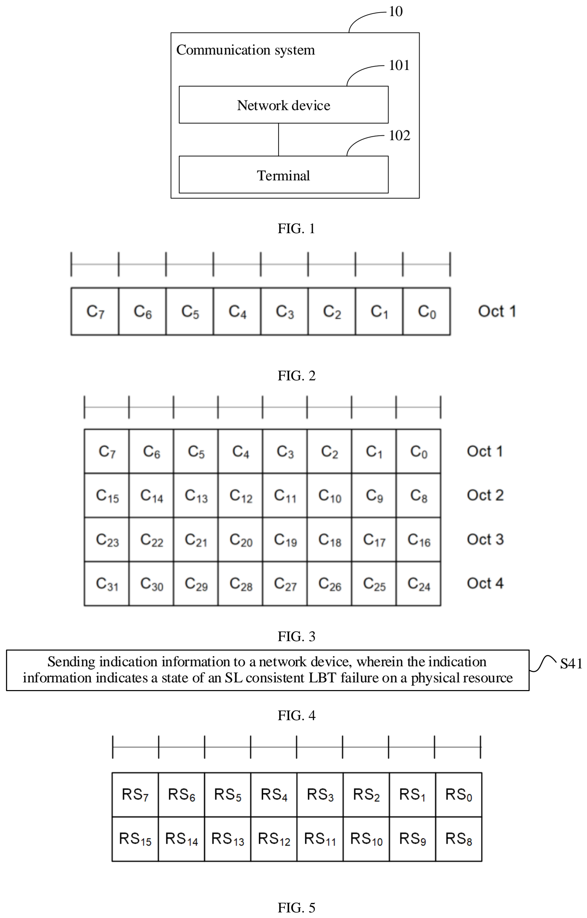

Please refer to FIG. 1, which is a schematic diagram of architecture of a communication system provided in an embodiment of the present disclosure. The communication system may include but is not limited to one network device and one terminal. The number and form of devices shown in FIG. 1 are for example only and do not constitute a limitation on the embodiments of the present disclosure. In applications, it may include two or more than two network devices, and two or more than two terminals. The communication system 10 shown in FIG. 1 takes the example of including one network device 101 and one terminal 102.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The network device 101 in embodiments of the present disclosure is an entity on the network side used for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the base station, such as the protocol layers of the base station, with some protocol layer functions centrally controlled by the CU and the remaining or all protocol layer functions distributed in the DUs, which are centrally controlled by the CU.

The terminal 102 in embodiments of the present disclosure is an entity on the user side used for receiving or transmitting signals, such as mobile phones. The terminal may also be referred to as terminal device, user equipment (UE), mobile station (MS), mobile terminal (MT), etc. The terminal may be communication enabled car, smart car, mobile phone, wearable device, tablet, computer with wireless transmission and reception capabilities, virtual reality (VR) terminal, augmented reality (AR) terminal, wireless terminal in industrial control, wireless terminal in self-driving, wireless terminal in remote medical surgery, wireless terminal in smart grid, wireless terminal in transportation safety, wireless terminal in smart city and wireless terminal in smart home, etc. The specific technology and device form adopted by the terminal is not limited in embodiments of the present disclosure.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

In addition, for the sake of clarity in understanding the embodiments of the present disclosure, the following points are provided for explanation.

Firstly, in the embodiments of the present disclosure, "used to indicate" may include both direct and indirect indication. When describing that a certain piece of information is used to indicate A, it may imply that the information carries A, or it may also include that the information directly or indirectly indicates A, without necessarily implying that the information must contain A.

The information indicated by the information is referred to as the target information, and there are various ways to indicate the target information in the specific implementation process. For example, but not limited to, the target information may be directly indicated, such as the target information itself or the index of the target information. Alternatively, the target information may be indirectly indicated by indicating other information, where there is an association between the other information and the target information. Additionally, only a portion of the target information may be indicated, while the other parts of the target information are known or pre-agreed. For instance, the indication of specific information may also be achieved by using the pre-agreed (e.g., protocol-defined) arrangement order of various pieces of information, thereby reducing the indication overhead to some extent.

The target information may be transmitted as a whole or divided into multiple sub-information items for separate transmission. The transmission cycles and/or timing of these sub-information items may be the same or different. The specific transmission method is not limited in this disclosure. The transmission cycles and/or timing of these sub-information items may be predefined, such as according to a protocol.

Secondly, the first, second, and various numerical designations in this disclosure are only for the convenience of description and are not intended to limit the scope of the embodiments disclosed herein. For example, they are used for distinguishing different types of information.

Thirdly, the embodiments of the present disclosure list multiple implementations to clearly illustrate the technical solution of the embodiments of the present disclosure. Of course, those skilled in the art can understand that the multiple embodiments provided in this disclosure can be executed separately, combined with the methods of other embodiments in this disclosure, or executed separately or in combination with some methods in other related technologies, which is not limited in the embodiments of the present disclosure.

In order to support direct communication between terminals, the Sidelink (SL, also known as direct link) communication has been introduced, and the interface between terminals is PC-5. Based on the correspondence between the sending terminal and the receiving terminal, three transmission modes are supported on the sidelink: unicast, multicast, and broadcast. The sending terminal sends sidelink control information (SCI) on the physical sidelink control channel (PSCCH) and sends the second-stage SCI on the physical sidelink shared channel (PSSCH), which carries the resource location, source identifier, and destination identifier of the transmitted data. For hybrid automatic repeat request (HARQ) feedback enabled data packets, the receiving terminal performs hybrid automatic repeat request-acknowledgement (HARQ-ACK) feedback to the PSSCH on the physical sidelink feedback channel (PSFCH).

Sidelink communication has two ways of allocating transmission resources, one is the dynamic scheduling by the network device (mode 1), and the other is the autonomous selection by the terminal in the resource pool broadcasted by the network device (mode 2). Dynamic scheduling refers to the network device dynamically allocating transmission resources on the sidelink to the terminal based on the cached data reported by the terminal, while autonomous selection refers to the terminal randomly selecting transmission resources from the resource pool broadcast by the network device or the pre-configured resource pool. The network device may configure multiple resource pools for the terminal on a bandwidth part (BWP). The specific allocation method used is configured by the network device through the radio resource control (RRC) signaling.

New Radio-Unlicensed (NR-U) is a project initiated by the Third Generation Partnership Project (3GPP) in Release 16 (R16), providing necessary technology for operators to fully integrate the unlicensed spectrum into the fifth generation (5G) network device. NR-U supports uplink and downlink operations on the unlicensed frequency bands. In NR-U, both downlink and uplink channel access rely on the listen before talk (LBT) feature. Wireless devices or base stations must first "sense" the communication channel and detect no communication before any transmission. When a communication channel is an unlicensed wideband carrier (e.g., several hundred megahertz), the LBT process relies on detecting energy levels on multiple sub bands of the communication channel. LBT parameters (such as type/duration, clear channel evaluation parameters, etc.) are configured by the base station on the wireless device.

Consistent LBT failure is a new feature defined in NR-U, where the terminal counts the number of uplink LBT failures on each BWP. The network device configures the terminal with the maximum number of consistent LBT failures (lbt-FailureInstanceMaxCount) and the consistent LBT failure detection time (lbt-FailureDetectionTimer) for counting the consistent LBT failures per serving cell through the RRC signaling (such as lbt-FailureRecoveryConfig). The terminal maintains an LBT counter variable per cell, with an initial value of 0.

For each cell activated and configured with lbt-Failure-RecoveryConfig, when the terminal receives an LBT failure indication submitted by the physical layer, the lbt-FailureDetectionTimer is started or restarted, and the LBT counter is increased by 1, and when LBT counter is greater than or equal to lbt-FailureInstanceMaxCount, the activated BWP on that cell triggers the consistent LBT failure. When the lbt-FailureDetectionTimer times out, or when the upper layer reconfigures the lbt-FailureInstanceMaxCount/lbt-FailureDetectionTimer, or when all consistent LBT failures on this serving cell are canceled, the terminal resets the LBT counter to 0. When the terminal detects consistent LBT failures on the activated BWP of PCell (primary cell) or PSCell, if there are other BWPs configured with PRACH resources in the cell, the terminal triggers the BWP switch, switches to the BWP configured with PRACH resources, and initiates the RACH process. If the terminal detects consistent LBT failures in N BWPs configured with PRACH resources in the primary cell, the terminal initiates a Radio Link Failure (RLF) recovery process. If consistent LBT failures are detected on the activated BWP of SCell (secondary cell), the terminal indicates the cell identifier where consistent LBT failures occur to the network device through the Media Access Control-Control Element (MAC CE). This MAC CE can carry multiple cell identifiers where consistent LBT failures are detected, and is sent through other serving cells that have not experienced consistent LBT failures.

In some embodiments, as shown in FIG. 2 and FIG. 3, there are two formats of MAC CE for the consistent LBT failures. FIG. 2 shows the format using one byte (Oct), and FIG. 3 shows the format using four bytes. 1 bit is used to indicate whether the cell associated with ServCellIndex i (such as C₀, C₁, etc.) has detected the consistent LBT failure, where 1 indicates that the cell associated with ServCellIndex i has detected the consistent LBT failure, and 0 indicates that the cell associated with ServCellIndex i has not detected the consistent LBT failure.

For the Sidelink in Release R18, it supports working on the unlicensed spectrum. Sidelink communication can utilize the unlicensed spectrum for communication. The unlicensed spectrum is open and can be effectively utilized to improve performance and speed. This scenario can be called Sidelink-U (Sidelink-Unlicensed) scenario. The terminal sending Sidelink data on the unlicensed spectrum also require Listen Before Talk (LBT). The consistent LBT mechanism is also applicable to Sidelink communication on the unlicensed spectrum. However, there is currently a lack of effective means for reporting the SL consistent LBT failure.

Based on this, an information sending method is proposed in embodiments of the present disclosure, in which a terminal sends indication information to a network device, wherein the indication information indicates a state of an SL consistent LBT failure on a physical resource. Thus, it can support the terminal to report the state of the SL consistent LBT failure on the physical resource.

The following provides a detailed introduction to the information sending method and apparatus provided in this disclosure, in conjunction with the accompanying drawings.

Please refer to FIG. 4, which is a flowchart of an information sending method provided in an embodiment of the present disclosure. As shown in FIG. 4, the method is performed by a terminal, and the method may include but is not limited to the following steps:

S41, sending indication information to a network device, wherein the indication information indicates a state of an SL consistent LBT failure on a physical resource.

In an embodiment of the present disclosure, the terminal can send the indication information to the network device, wherein the indication information indicates the state of the SL consistent LBT failure on the physical resource.

The physical resource may be at least one of a resource pool, a resource block set, a carrier, etc.

As an example, the terminal may send the indication information to the network device, indicating the state of the SL consistent LBT failure on at least one resource pool.

As an example, the terminal may send the indication information to the network device, indicating the state of the SL consistent LBT failure on at least one resource block set.

As an example, the terminal may send the indication information to the network device, indicating the state of the SL consistent LBT failure on at least one carrier.

In some embodiments, sending the indication information to the network device by the terminal includes: sending a MAC CE to the network device, wherein the MAC CE includes the indication information.

In an embodiment of the present disclosure, the terminal may send the MAC CE to the network device, wherein the MAC CE includes the indication information for indicating the state of the SL consistent LBT failure on at least one physical resource. Thus, it can support the terminal to report the state of the SL consistent LBT failure on the physical resource.

In some embodiments, the physical resource includes a resource block set, and the indication information indicates the state of the SL consistent LBT failure on at least one resource block set.

In an embodiment of the present disclosure, the physical resource includes a resource block set. In this case, the indication information may indicate the state of the SL consistent failure on at least one resource block set.

In some embodiments, the indication information includes a first bitmap, which includes a first bit; the first bit corresponds to the resource block set; or the first bit corresponds to an index identifier associated with the resource block set, and different resource block sets correspond to different index identifiers.

In some embodiments, the indication information includes the first bitmap.

In an embodiment of the present disclosure, the indication information may include the first bitmap, and the first bitmap may be used to indicate the state of the SL consistent LBT failure on at least one resource block set.

In some embodiments, at least one first bit in the first bitmap corresponds one-to-one with the at least one resource block set.

In an embodiment of the present disclosure, at least one first bit of the first bitmap corresponds one-to-one with at least one resource block set. Different values of the first bit may be used to indicate different states of the SL consistent LBT failure on the corresponding resource block set.

For example, when the value of the first bit is "1," it indicates that the corresponding resource block set triggers the SL consistent LBT failure and the triggered SL consistent LBT failure status has not been canceled; when the value of the first bit is "0," it indicates that the corresponding resource block set does not trigger the SL consistent LBT failure, or it indicates that the corresponding resource block set triggers the SL consistent LBT failure but the triggered SL consistent LBT failure has been canceled.

The first bit may directly correspond to the resource block set, or may correspond to specific information of the resource block set, from which the resource block set corresponding to the first bit can be uniquely determined. For example, the specific information may be the index identifier of the resource block set.

In some embodiments, at least one first bit of the first bitmap is in one-to-one correspondence with the index identifier associated with at least one resource block set, where different resource block sets correspond to different index identifiers.

It can be understood that different index identifiers may be set for different resource block sets, where different resource block sets may include different resource block sets in different resource pools, as well as different resource block sets in the same resource pool. That is to say, each resource block set belonging to an unlicensed carrier has a unique index identifier.

In some embodiments, the resource block sets belonging to the unlicensed carrier may be set with different index identifiers.

In an embodiment of the present disclosure, when different resource block sets correspond to different index identifiers, at least one first bit of the first bitmap may correspond one-to-one with the index identifier associated with the at least one resource block set. Therefore, the first bit may be used to indicate the state of the SL consistent LBT failure on the resource block set associated with the corresponding index identifier.

In some embodiments, the first bit is set to a first value, indicating that the state of consistent LBT failure on the resource block set corresponding to the first bit is a first state, wherein the first state is a state where the SL consistent LBT failure is triggered and the triggered SL consistent LBT failure has not been canceled; or the first bit is set to a second value, indicating that the state of the consistent LBT failure on the resource block set corresponding to the first bit is a second state, wherein the second state is a state where the SL consistent LBT failure is not triggered, or the SL consistent LBT failure is triggered, and the triggered SL consistent LBT failure has been canceled.

In an embodiment of the present disclosure, in the case where the first bit corresponds to the resource block set, the resource block set corresponding to the first bit may be the resource block set directly corresponding to the first bit; in the case where the first bit corresponds to the index identifier associated with the resource block set, the resource block set corresponding to the first bit may be the resource block set associated with the index identifier corresponding to the first bit.

It can be understood that the state of SL consistent LBT failure on the resource block set is the first state, and in this case, the resource block set triggers the SL consistent LBT failure and the triggered SL consistent LBT failure has not been canceled, and thus the resource block set cannot be used for SL transmission.

It can be understood that the state of SL consistent LBT failure on the resource block set is the second state, and in this case, the resource block set has not triggered the SL consistent LBT failure, or the resource block set triggers the SL consistent LBT failure and the triggered SL consistent LBT failure has been canceled, and thus the resource block set can be used for SL transmission.

In some embodiments, the first bit is set to the first value, indicating that the resource block set associated with the index identifier corresponding to the first bit triggers the SL consistent LBT failure and the triggered SL consistent LBT failure state has not been canceled; the first bit is set to the second value, indicating that the resource block set associated with the index identifier corresponding to the first bit has not triggered the SL consistent LBT failure, or indicating that the resource block set associated with the index identifier corresponding to the first bit has triggered the SL consistent LBT failure and the triggered SL consistent LBT failure has been canceled.

In an embodiment of the present disclosure, in the case where the first bit may be used to indicate the state of SL consistent LBT failure on the resource block set associated with the corresponding index identifier, the first bit is the first value, which may indicate that the resource block set associated with the index identifier corresponding to the first bit triggers the SL consistent LBT failure and the triggered SL consistent LBT failure has not been canceled.

In an embodiment of the present disclosure, in the case where the first bit may be used to indicate the state of SL consistent LBT failure on the resource block set associated with the corresponding index identifier, the first bit is the second value, which may indicate that the resource block set associated with the index identifier corresponding to the first bit has not triggered the SL consistent LBT failure, or indicate that the resource block set associated with the index identifier corresponding to the first bit has triggered the SL consistent LBT failure and the triggered SL consistent LBT failure has been canceled.

In some embodiments, the first value may be "1" and the second value may be "0".

In some embodiments, the first value may be "0" and the second value may be "1".

In some embodiments, the MAC CE includes the indication information, and the indication information may indicate the state of SL consistent LBT failure on at least one resource block set. The first bit length/first bitmap length of the MAC CE depends on the maximum identifier of the index identifiers of the detected resource block sets that have triggered the SL consistent LBT failure.

For example, if the terminal can configure up to 32 resource block sets, two formats are defined. If the index identifier of the resource block set starts from 0 and the maximum identifier of the index identifiers of the detected resource block sets that trigger the SL consistent LBT failure is less than 8, the first bit length/first bitmap length of the MAC CE may be 1 byte. Otherwise, the first bit length/first bitmap length is 4 bytes.

In some embodiments, the first bit length/first bitmap length of the MAC CE depends on the maximum number of resource block sets that can be configured by the terminal.

For example, if the terminal can configure less than or equal to 8 resource block sets, the first bit length/first bitmap length is 1 byte; if the terminal can configure more than 8 but less than or equal to 16 resource block sets, the first bit length/first bitmap length is 2 bytes; if the terminal can configure more than 16 but less than or equal to 24 resource block sets, the first bit length/first bitmap length is 3 bytes; if the terminal can configure more than 24 but less than or equal to 32 resource block sets, the first bit length/first bitmap length is 4 bytes.

For example, as shown in FIG. 5, if the terminal can configure up to 16 resource block sets, the first bit length/the first bitmap length is 2 bytes.

In some embodiments, the physical resource includes a resource pool, and the indication information indicates the state of SL consistent LBT failure on at least one resource pool.

In an embodiment of the present disclosure, the indication information may include a first bitmap, and the first bitmap may be used to indicate the state of SL consistent LBT failure on the at least one resource pool.

In an embodiment of the present disclosure, at least one first bit of the first bitmap corresponds one-to-one with the at least one resource pool, and different values of the first bit may be used to indicate different states of the SL consistent LBT failure on the corresponding resource pool.

For example, when the value of the first bit is "1", it indicates that the corresponding resource pool triggered the SL consistent LBT failure and the triggered SL consistent LBT failure has not been canceled; when the value of the first bit is "0", it indicates that the corresponding resource pool has not triggered the SL consistent LBT failure, or indicates that the resource pool has triggered the SL consistent LBT failure and the triggered SL consistent LBT failure has been canceled.

The first bit may directly correspond to the resource pool, or the first bit may also correspond to specific information of the resource pool, which can uniquely determine the resource pool corresponding to the first bit. For example, specific information may be the index identifier of the resource pool.

In some embodiments, at least one first bit of the first bitmap corresponds one-to-one with the index identifier associated with the at least one resource pool, where different resource pools correspond to different index identifiers. That is to say, each resource pool belonging to the unlicensed carrier has a unique index identifier.

It can be understood that different index identifiers may be set for different resource pools.

In some embodiments, resource pools belonging to unlicensed carriers may be assigned different index identifiers.

In an embodiment of the present disclosure, when different resource pools correspond to different index identifiers, at least one first bit of the first bitmap may correspond one-to-one with the index identifier associated with the at least one resource pool. Therefore, the first bit can be used to indicate the state of SL consistent LBT failure on the resource pool associated with the corresponding index identifier.

In some embodiments, the first bit is set to a first value, indicating that the resource pool associated with the index identifier corresponding to the first bit triggers the SL consistent LBT failure and the triggered SL consistent LBT failure has not been canceled; the first bit is set to a second value, indicating that the resource pool associated with the index identifier corresponding to the first bit has not triggered the SL consistent LBT failure, or indicating that the resource pool associated with the index identifier corresponding to the first bit has triggered the SL consistent LBT failure and the triggered SL consistent LBT failure has been canceled.

In an embodiment of the present disclosure, in the case where the first bit can be used to indicate the state of SL consistent LBT failure on the resource pool associated with the corresponding index identifier, the first bit is the first value, which may indicate that the resource pool associated with the index identifier corresponding to the first bit triggers the SL consistent LBT failure and the triggered SL consistent LBT failure has not been canceled.

In an embodiment of the present disclosure, in the case where the first bit can be used to indicate the state of SL consistent LBT failure on the resource pool associated with the corresponding index identifier, the first bit is the second value, which may indicate that the resource pool associated with the index identifier corresponding to the first bit has not triggered the SL consistent LBT failure, or indicate that the resource pool associated with the index identifier corresponding to the first bit triggers the SL consistent LBT failure and the triggered SL consistent LBT failure has been canceled.

In some embodiments, the first value may be "1" and the second value may be "0".

In some embodiments, the first value may be "0" and the second value may be "1".

In some embodiments, the MAC CE includes the indication information, and the indication information may indicate the state of SL consistent LBT failure on at least one resource pool. The first bit length/first bitmap length of the MAC CE depends on the maximum identifier of the index identifiers of the detected resource pools that have triggered the SL consistent LBT failure.

For example, if the terminal can configure up to 32 resource pools, two formats are defined. If the index identifier of the resource pool starts from 0 and the maximum identifier of the index identifiers of the detected resource pools that trigger the SL consistent LBT failure is less than 8, the first bit length/first bitmap length of the MAC CE may be 1 byte. Otherwise, the first bit length/first bitmap length is 4 bytes.

In some embodiments, the first bit length/first bitmap length of the MAC CE depends on the maximum number of resource pools that can be configured by the terminal.

For example, if the terminal can configure less than or equal to 8 resource pools, the first bit length/first bitmap length is 1 byte; if the terminal can configure more than 8 but less than or equal to 16 resource pools, the first bit length/first bitmap length is 2 bytes; if the terminal can configure more than 16 but less than or equal to 24 resource pools, the first bit length/first bitmap length is 3 bytes; if the terminal can configure more than 24 but less than or equal to 32 resource pools, the first bit length/first bitmap length is 4 bytes.

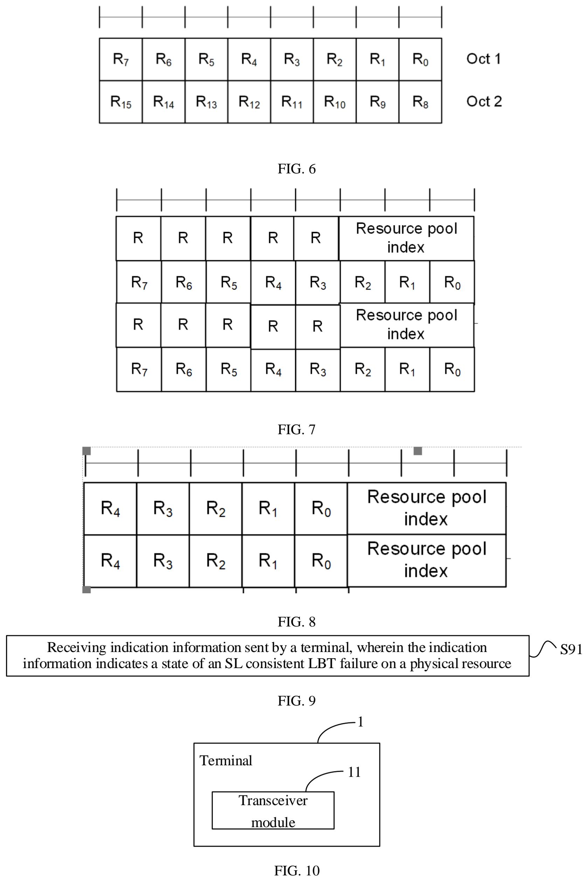

For example, as shown in FIG. 6, if the terminal can configure up to 16 resource pools, the first bit length/the first bitmap length is 2 bytes.

In some embodiments, the indication information includes a second bitmap and a resource pool identifier, wherein the second bitmap includes a second bit. The second bit corresponds to the resource block set in the resource pool corresponding to the resource pool identifier; or the second bit corresponds to the index identifier associated with the resource block set in the resource pool corresponding to the resource pool identifier, and different resource block sets in the same resource pool correspond to different index identifiers.

In some embodiments, the indication information includes the second bitmap and the resource pool identifier.

In an embodiment of the present disclosure, the indication information may include the second bitmap and the resource pool identifier, and the second bitmap and the resource pool identifier may be used to indicate the state of SL consistent LBT failure on at least one resource block set in the resource pool corresponding to the resource pool identifier.

In some embodiments, at least one second bit of the second bitmap corresponds one-to-one with at least one resource block set in the resource pool corresponding to the resource pool identifier.

In an embodiment of the present disclosure, in the case where the indication information includes the second bitmap and the resource pool identifier, at least one second bit of the second bitmap corresponds one-to-one with at least one resource block set in the resource pool corresponding to the resource pool identifier, and the second bit may be used to indicate the state of SL consistent LBT failure on the resource block set in the resource pool corresponding to the resource pool identifier.

For example, when the value of the second bit is "1", it indicates that the resource block set in the resource pool corresponding to the resource pool identifier triggers the SL consistent LBT failure and the triggered SL consistent LBT failure has not been canceled; when the value of the second bit is "0", it indicates that the resource block set in the resource pool corresponding to the resource pool identifier has not triggered the SL consistent LBT failure, or indicates that the resource block set in the resource pool corresponding to the resource pool identifier has triggered the SL consistent LBT failure and the triggered SL consistent LBT failure has been canceled.

In some embodiments, at least one second bit of the second bitmap corresponds one-to-one with the index identifier associated with at least one resource block set in the resource pool corresponding to the resource pool identifier, where different resource block sets in the same resource pool correspond to different index identifiers. That is to say, each resource block set belonging to the same resource pool has a unique identifier.

It can be understood that for different resource block sets in the same resource pool, different index identifiers can be set separately.

In an embodiment of the present disclosure, in the case where different resource block sets in the same resource pool correspond to different index identifiers, at least one second bit of the second bitmap corresponds one-to-one with the index identifier associated with at least one resource block set in the resource pool corresponding to the resource pool identifier. Therefore, the second bit can be used to indicate the state of the SL consistent LBT failure on the resource block set associated with the index identifier in the resource pool corresponding to the resource pool identifier.

In some embodiments, the second bit is set to the first value, indicating that in the resource pool, the state of consistent LBT failure on the resource block set corresponding to the second bit is a third state, wherein the third state is a state where the SL consistent LBT failure is triggered and the triggered SL consistent LBT failure has not been canceled; or the second bit is set to the second value, indicating that in the resource pool, the state of consistent LBT failure on the resource block set corresponding to the second bit is a fourth state, wherein the fourth state is a state where SL consistent LBT failure is not triggered, or a state where SL consistent LBT failure is triggered, and the triggered SL consistent LBT failure has been canceled.

In an embodiment of the present disclosure, in the case where the second bit corresponds to the resource block set in the resource pool corresponding to the resource pool identifier, the resource block set corresponding to the second bit may be a resource block set directly corresponding to the second bit in the resource pool corresponding to the resource pool identifier; in the case where second bit corresponds to the index identifier associated with the resource block set in the resource pool corresponding to the resource pool identifier, the resource block set corresponding to the second bit may be the resource block set associated with the index identifier corresponding to the second bit.

It can be understood that the state of SL consistent LBT failure on the resource block set is the third state, and in this case, the resource block set triggers the SL consistent LBT failure, and the triggered SL consistent LBT failure has not been canceled, and thus the resource block set cannot be used for SL transmission.

It can be understood that the state of SL consistent LBT failure on the resource block set is the fourth state, and in this case, the resource block set has not triggered the SL consistent LBT failure, or the resource block set triggers the SL consistent LBT failure and the triggered SL consistent LBT failure has been canceled, and thus the resource block set can be used for SL transmission.

In some embodiments, the second bit is set to the first value, indicating that the resource block set associated with the index identifier corresponding to the second bit in the resource pool corresponding to the resource pool identifier triggers the SL consistent LBT failure and the triggered SL consistent LBT failure has not been canceled; the second bit is set to the second value, indicating that the resource block set associated with the index identifier corresponding to the second bit in the resource pool corresponding to the resource pool identifier has not triggered the SL consistent LBT failure, or indicating that the resource block set associated with the index identifier corresponding to the second bit in the resource pool corresponding to the resource pool identifier has triggered the SL consistent LBT failure and the triggered SL consistent LBT failure has been canceled.

In an embodiment of the present disclosure, in the case where the second bit can be used to indicate the state of the SL consistent LBT failure on the resource block set associated with the index identifier in the resource pool corresponding to the resource pool identifier, the second bit is set to the first value, indicating that the resource block set associated with the index identifier corresponding to the second bit in the resource pool corresponding to the resource pool identifier triggers the SL consistent LBT failure and the triggered SL consistent LBT failure has not been canceled.

In an embodiment of the present disclosure, in the case where the second bit can be used to indicate the state of SL consistent LBT failure on the resource block set associated with the index identifier in the resource pool corresponding to the resource pool identifier, the second bit is set to the second value, indicating that the resource block set associated with the index identifier corresponding to the second bit in the resource pool corresponding to the resource pool identifier has not triggered the SL consistent LBT failure, or indicating that the resource block set associated with the index identifier corresponding to the second bit in the resource pool corresponding to the resource pool identifier has triggered the SL consistent LBT failure and the triggered SL consistent LBT failure has been canceled.

In some embodiments, the first value may be "1" and the second value may be "0".

In some embodiments, the first value may be "0" and the second value may be "1".

In some embodiments, the MAC CE includes the indication information, and the indication information indicates the state of SL consistent LBT failure on at least one resource block set in the resource pool corresponding to the resource pool identifier.

In some embodiments, the second bit length/second bitmap length associated with a resource pool identifier depends on the maximum number of resource block sets that can be configured by the terminal in a resource pool.

For example, if the terminal can configure less than or equal to 8 resource block sets in a resource pool, the second bit length/second bitmap length associated with a resource pool is 1 byte; if the terminal can configure more than 8 and less than or equal to 16 resource block sets in a resource pool, the second bit length/second bitmap length associated with a resource pool is 2 bytes; if the terminal can configure more than 16 and less than or equal to 24 resource block sets in a resource pool, the second bit length/second bitmap length associated with a resource pool is 3 bytes; if the terminal can configure more than 24 and less than or equal to 32 resource block sets in a resource pool, the second bit length/second bitmap length associated with a resource pool is 4 bytes.

For example, as shown in FIG. 7, if the terminal can configure up to 8 resource pools, and a resource pool can configure up to 8 resource block sets, the resource pool identifier is 3 bits, and the second bit length/second bitmap length associated with a resource pool identifier is 8 bits. The extra bits are reserved with R bits to ensure alignment of 8 bits.

For example, as shown in FIG. 8, if the terminal can configure up to 8 resource pools, and a resource pool can configure up to 5 resource block sets, then the resource pool identifier is 3 bits, and the second bit length/second bitmap length associated with a resource pool identifier is 5 bits.

It should be noted that the above examples are only for illustration purposes and do not serve as specific limitations on the embodiments of the present disclosure. The format of the MAC CE may also be in other forms.

In this embodiment or implementation, various steps can be executed independently, arbitrarily combined, or exchanged in order without contradiction. Optional implementations or examples can be arbitrarily combined and can be combined with other embodiments or implementations in any way.

By implementing this embodiment of the present disclosure, the terminal sends the indication information to the network device, wherein the indication information indicates the state of the SL consistent LBT failure on the physical resource. Thus, it can support the terminal to report the state of the SL consistent LBT failure on the physical resource.

Please refer to FIG. 9, which is a flowchart of another information sending method provided in an embodiment of the present disclosure. As shown in FIG. 9, the method is performed by a network device, and the method may include but is not limited to the following steps:

S91, receiving indication information sent by a terminal, wherein the indication information indicates a state of an SL consistent LBT failure on a physical resource.

In an embodiment of the present disclosure, the network device can receive the indication information sent by the terminal, wherein the indication information indicates the state of the SL consistent LBT failure on the physical resource.

The physical resource may be at least one of a resource pool, a resource block set, a carrier, etc.

As an example, the network device may receive the indication information sent by the terminal, indicating the state of the SL consistent LBT failure on at least one resource pool.

As an example, the network device may receive the indication information sent by the terminal, indicating the state of the SL consistent LBT failure on at least one resource block set.

As an example, the network device may receive the indication information sent by the terminal, indicating the state of the SL consistent LBT failure on at least one carrier.

In some embodiments, receiving the indication information sent by the terminal includes: receiving a MAC CE sent by the terminal, wherein the MAC CE includes the indication information.

In an embodiment of the present disclosure, the network device may receive the MAC CE sent by the terminal, wherein the MAC CE includes the indication information for indicating the state of the SL consistent LBT failure on at least one physical resource. Thus, it can support the terminal to report the state of the SL consistent LBT failure on the physical resource.

In some embodiments, the physical resource includes a resource block set, and the indication information indicates the state of the SL consistent LBT failure on at least one resource block set.

In an embodiment of the present disclosure, the physical resource includes a resource block set. In this case, the indication information may indicate the state of the SL consistent failure on at least one resource block set.

In some embodiments, the indication information includes a first bitmap, which includes a first bit; the first bit corresponds to the resource block set; or the first bit corresponds to an index identifier associated with the resource block set, and different resource block sets correspond to different index identifiers.

In some embodiments, the indication information includes the first bitmap.

In an embodiment of the present disclosure, the indication information may include the first bitmap, and the first bitmap may be used to indicate the state of the SL consistent LBT failure on at least one resource block set.

In some embodiments, at least one first bit in the first bitmap corresponds one-to-one with the at least one resource block set.

In an embodiment of the present disclosure, at least one first bit of the first bitmap corresponds one-to-one with at least one resource block set. Different values of the first bit may be used to indicate different states of the SL consistent LBT failure on the corresponding resource block set.

For example, when the value of the first bit is "1," it indicates that the corresponding resource block set triggers the SL consistent LBT failure and the triggered SL consistent LBT failure status has not been canceled; when the value of the first bit is "0," it indicates that the corresponding resource block set does not trigger the SL consistent LBT failure, or it indicates that the corresponding resource block set triggers the SL consistent LBT failure but the triggered SL consistent LBT failure has been canceled.

The first bit may directly correspond to the resource block set, or may correspond to specific information of the resource block set, from which the resource block set corresponding to the first bit can be uniquely determined. For example, the specific information may be the index identifier of the resource block set.

In some embodiments, at least one first bit of the first bitmap is in one-to-one correspondence with the index identifier associated with at least one resource block set, where different resource block sets correspond to different index identifiers.

It can be understood that different index identifiers may be set for different resource block sets, where different resource block sets may include different resource block sets in different resource pools, as well as different resource block sets in the same resource pool.

In some embodiments, the resource block sets belonging to the unlicensed carriers may be set with different index identifiers.

In an embodiment of the present disclosure, when different resource block sets correspond to different index identifiers, at least one first bit of the first bitmap may correspond one-to-one with the index identifier associated with the at least one resource block set. Therefore, the first bit may be used to indicate the state of the SL consistent LBT failure on the resource block set associated with the corresponding index identifier.

In some embodiments, the first bit is set to a first value, indicating that the state of consistent LBT failure on the resource block set corresponding to the first bit is a first state, wherein the first state is a state where the SL consistent LBT failure is triggered and the triggered SL consistent LBT failure has not been canceled; or the first bit is set to a second value, indicating that the state of the consistent LBT failure on the resource block set corresponding to the first bit is a second state, wherein the second state is a state where the SL consistent LBT failure is not triggered, or the SL consistent LBT failure is triggered, and the triggered SL consistent LBT failure has been canceled.

In an embodiment of the present disclosure, in the case where the first bit corresponds to the resource block set, the resource block set corresponding to the first bit may be the resource block set directly corresponding to the first bit; in the case where the first bit corresponds to the index identifier associated with the resource block set, the resource block set corresponding to the first bit may be the resource block set associated with the index identifier corresponding to the first bit.

It can be understood that the state of SL consistent LBT failure on the resource block set is the first state, and in this case, the resource block set triggers the SL consistent LBT failure and the triggered SL consistent LBT failure has not been canceled, and thus the resource block set cannot be used for SL transmission.

It can be understood that the state of SL consistent LBT failure on the resource block set is the second state, and in this case, the resource block set has not triggered the SL consistent LBT failure, or the resource block set triggers the SL consistent LBT failure and the triggered SL consistent LBT failure has been canceled, and thus the resource block set can be used for SL transmission.

In some embodiments, the first bit is set to the first value, indicating that the resource block set associated with the index identifier corresponding to the first bit triggers the SL consistent LBT failure and the triggered SL consistent LBT failure state has not been canceled; the first bit is set to the second value, indicating that the resource block set associated with the index identifier corresponding to the first bit has not triggered the SL consistent LBT failure, or indicating that the resource block set associated with the index identifier corresponding to the first bit has triggered the SL consistent LBT failure and the triggered SL consistent LBT failure has been canceled.

In an embodiment of the present disclosure, in the case where the first bit may be used to indicate the state of SL consistent LBT failure on the resource block set associated with the corresponding index identifier, the first bit is the first value, which may indicate that the resource block set associated with the index identifier corresponding to the first bit triggers the SL consistent LBT failure and the triggered SL consistent LBT failure has not been canceled.

In an embodiment of the present disclosure, in the case where the first bit may be used to indicate the state of SL consistent LBT failure on the resource block set associated with the corresponding index identifier, the first bit is the second value, which may indicate that the resource block set associated with the index identifier corresponding to the first bit has not triggered the SL consistent LBT failure, or indicate that the resource block set associated with the index identifier corresponding to the first bit has triggered the SL consistent LBT failure and the triggered SL consistent LBT failure has been canceled.

In some embodiments, the first value may be "1" and the second value may be "0".

In some embodiments, the first value may be "0" and the second value may be "1".

In some embodiments, the MAC CE includes the indication information, and the indication information may indicate the state of SL consistent LBT failure on at least one resource block set. The first bit length/first bitmap length of the MAC CE depends on the maximum identifier of the index identifiers of the detected resource block sets that have triggered the SL consistent LBT failure.

For example, if the terminal can configure up to 32 resource block sets, two formats are defined. If the index identifier of the resource block set starts from 0 and the maximum identifier of the index identifiers of the detected resource block sets that trigger the SL consistent LBT failure is less than 8, the first bit length/first bitmap length of the MAC CE may be 1 byte. Otherwise, the first bit length/first bitmap length is 4 bytes.

In some embodiments, the first bit length/first bitmap length of the MAC CE depends on the maximum number of resource block sets that can be configured by the terminal.

For example, if the terminal can configure less than or equal to 8 resource block sets, the first bit length/first bitmap length is 1 byte; if the terminal can configure more than 8 but less than or equal to 16 resource block sets, the first bit length/first bitmap length is 2 bytes; if the terminal can configure more than 16 but less than or equal to 24 resource block sets, the first bit length/first bitmap length is 3 bytes; if the terminal can configure more than 24 but less than or equal to 32 resource block sets, the first bit length/first bitmap length is 4 bytes.

For example, as shown in FIG. 5, if the terminal can configure up to 16 resource block sets, the first bit length/the first bitmap length is 2 bytes.

In some embodiments, the physical resource includes a resource pool, and the indication information indicates the state of SL consistent LBT failure on at least one resource pool.

In an embodiment of the present disclosure, the indication information may include a first bitmap, and the first bitmap may be used to indicate the state of SL consistent LBT failure on the at least one resource pool.

In an embodiment of the present disclosure, at least one first bit of the first bitmap corresponds one-to-one with the at least one resource pool, and different values of the first bit may be used to indicate different states of the SL consistent LBT failure on the corresponding resource pool.

For example, when the value of the first bit is "1", it indicates that the corresponding resource pool triggered the SL consistent LBT failure and the triggered SL consistent LBT failure has not been canceled; when the value of the first bit is "0", it indicates that the corresponding resource pool has not triggered the SL consistent LBT failure, or indicates that the resource pool has triggered the SL consistent LBT failure and the triggered SL consistent LBT failure has been canceled.

The first bit may directly correspond to the resource pool, or the first bit may also correspond to specific information of the resource pool, which can uniquely determine the resource pool corresponding to the first bit. For example, specific information may be the index identifier of the resource pool.

In some embodiments, at least one first bit of the first bitmap corresponds one-to-one with the index identifier associated with the at least one resource pool, where different resource pools correspond to different index identifiers. That is to say, each resource pool belonging to the unlicensed carrier has a unique index identifier.

It can be understood that different index identifiers may be set for different resource pools.

In some embodiments, resource pools belonging to unlicensed carriers may be assigned different index identifiers.

In an embodiment of the present disclosure, when different resource pools correspond to different index identifiers, at least one first bit of the first bitmap may correspond one-to-one with the index identifier associated with the at least one resource pool. Therefore, the first bit can be used to indicate the state of SL consistent LBT failure on the resource pool associated with the corresponding index identifier.

In some embodiments, the first bit is set to a first value, indicating that the resource pool associated with the index identifier corresponding to the first bit triggers the SL consistent LBT failure and the triggered SL consistent LBT failure has not been canceled; the first bit is set to a second value, indicating that the resource pool associated with the index identifier corresponding to the first bit has not triggered the SL consistent LBT failure, or indicating that the resource pool associated with the index identifier corresponding to the first bit has triggered the SL consistent LBT failure and the triggered SL consistent LBT failure has been canceled.

In an embodiment of the present disclosure, in the case where the first bit can be used to indicate the state of SL consistent LBT failure on the resource pool associated with the corresponding index identifier, the first bit is the first value, which may indicate that the resource pool associated with the index identifier corresponding to the first bit triggers the SL consistent LBT failure and the triggered SL consistent LBT failure has not been canceled.

In an embodiment of the present disclosure, in the case where the first bit can be used to indicate the state of SL consistent LBT failure on the resource pool associated with the corresponding index identifier, the first bit is the second value, which may indicate that the resource pool associated with the index identifier corresponding to the first bit has not triggered the SL consistent LBT failure, or indicate that the resource pool associated with the index identifier corresponding to the first bit triggers the SL consistent LBT failure and the triggered SL consistent LBT failure has been canceled.

In some embodiments, the first value may be "1" and the second value may be "0".

In some embodiments, the first value may be "0" and the second value may be "1".

In some embodiments, the MAC CE includes the indication information, and the indication information may indicate the state of SL consistent LBT failure on at least one resource pool. The first bit length/first bitmap length of the MAC CE depends on the maximum identifier of the index identifiers of the detected resource pools that have triggered the SL consistent LBT failure.

For example, if the terminal can configure up to 32 resource pools, two formats are defined. If the index identifier of the resource pool starts from 0 and the maximum identifier of the index identifiers of the detected resource pools that trigger the SL consistent LBT failure is less than 8, the first bit length/first bitmap length of the MAC CE may be 1 byte. Otherwise, the first bit length/first bitmap length is 4 bytes.

In some embodiments, the first bit length/first bitmap length of the MAC CE depends on the maximum number of resource pools that can be configured by the terminal.

For example, if the terminal can configure less than or equal to 8 resource pools, the first bit length/first bitmap length is 1 byte; if the terminal can configure more than 8 but less than or equal to 16 resource pools, the first bit length/first bitmap length is 2 bytes; if the terminal can configure more than 16 but less than or equal to 24 resource pools, the first bit length/first bitmap length is 3 bytes; if the terminal can configure more than 24 but less than or equal to 32 resource pools, the first bit length/first bitmap length is 4 bytes.

For example, as shown in FIG. 6, if the terminal can configure up to 16 resource pools, the first bit length/the first bitmap length is 2 bytes.

In some embodiments, the indication information includes a second bitmap and a resource pool identifier, wherein the second bitmap includes a second bit. The second bit corresponds to the resource block set in the resource pool corresponding to the resource pool identifier; or the second bit corresponds to the index identifier associated with the resource block set in the resource pool corresponding to the resource pool identifier, and different resource block sets in the same resource pool correspond to different index identifiers.

In some embodiments, the indication information includes the second bitmap and the resource pool identifier.

In an embodiment of the present disclosure, the indication information may include the second bitmap and the resource pool identifier, and the second bitmap and the resource pool identifier may be used to indicate the state of SL consistent LBT failure on at least one resource block set in the resource pool corresponding to the resource pool identifier.

In some embodiments, at least one second bit of the second bitmap corresponds one-to-one with at least one resource block set in the resource pool corresponding to the resource pool identifier.

In an embodiment of the present disclosure, in the case where the indication information includes the second bitmap and the resource pool identifier, at least one second bit of the second bitmap corresponds one-to-one with at least one resource block set in the resource pool corresponding to the resource pool identifier, and the second bit may be used to indicate the state of SL consistent LBT failure on the resource block set in the resource pool corresponding to the resource pool identifier.

For example, when the value of the second bit is "1", it indicates that the resource block set in the resource pool corresponding to the resource pool identifier triggers the SL consistent LBT failure and the triggered SL consistent LBT failure has not been canceled; when the value of the second bit is "0", it indicates that the resource block set in the resource pool corresponding to the resource pool identifier has not triggered the SL consistent LBT failure, or indicates that the resource block set in the resource pool corresponding to the resource pool identifier has triggered the SL consistent LBT failure and the triggered SL consistent LBT failure has been canceled.

In some embodiments, at least one second bit of the second bitmap corresponds one-to-one with the index identifier associated with at least one resource block set in the resource pool corresponding to the resource pool identifier, where different resource block sets in the same resource pool correspond to different index identifiers. That is to say, each resource block set belonging to the same resource pool has a unique identifier.

It can be understood that for different resource block sets in the same resource pool, different index identifiers can be set separately.

In an embodiment of the present disclosure, in the case where different resource block sets in the same resource pool correspond to different index identifiers, at least one second bit of the second bitmap corresponds one-to-one with the index identifier associated with at least one resource block set in the resource pool corresponding to the resource pool identifier. Therefore, the second bit can be used to indicate the state of the SL consistent LBT failure on the resource block set associated with the index identifier in the resource pool corresponding to the resource pool identifier.

In some embodiments, the second bit is set to the first value, indicating that in the resource pool, the state of consistent LBT failure on the resource block set corresponding to the second bit is a third state, wherein the third state is a state where the SL consistent LBT failure is triggered and the triggered SL consistent LBT failure has not been canceled; or the second bit is set to the second value, indicating that in the resource pool, the state of consistent LBT failure on the resource block set corresponding to the second bit is a fourth state, wherein the fourth state is a state where SL consistent LBT failure is not triggered, or a state where SL consistent LBT failure is triggered, and the triggered SL consistent LBT failure has been canceled.

In an embodiment of the present disclosure, in the case where the second bit corresponds to the resource block set in the resource pool corresponding to the resource pool identifier, the resource block set corresponding to the second bit may be a resource block set directly corresponding to the second bit in the resource pool corresponding to the resource pool identifier; in the case where second bit corresponds to the index identifier associated with the resource block set in the resource pool corresponding to the resource pool identifier, the resource block set corresponding to the second bit may be the resource block set associated with the index identifier corresponding to the second bit.

It can be understood that the state of SL consistent LBT failure on the resource block set is the third state, and in this case, the resource block set triggers the SL consistent LBT failure, and the triggered SL consistent LBT failure has not been canceled, and thus the resource block set cannot be used for SL transmission.

It can be understood that the state of SL consistent LBT failure on the resource block set is the fourth state, and in this case, the resource block set has not triggered the SL consistent LBT failure, or the resource block set triggers the SL consistent LBT failure and the triggered SL consistent LBT failure has been canceled, and thus the resource block set can be used for SL transmission.

In some embodiments, the second bit is set to the first value, indicating that the resource block set associated with the index identifier corresponding to the second bit in the resource pool corresponding to the resource pool identifier triggers the SL consistent LBT failure and the triggered SL consistent LBT failure has not been canceled; the second bit is set to the second value, indicating that the resource block set associated with the index identifier corresponding to the second bit in the resource pool corresponding to the resource pool identifier has not triggered the SL consistent LBT failure, or indicating that the resource block set associated with the index identifier corresponding to the second bit in the resource pool corresponding to the resource pool identifier has triggered the SL consistent LBT failure and the triggered SL consistent LBT failure has been canceled.

In an embodiment of the present disclosure, in the case where the second bit can be used to indicate the state of the SL consistent LBT failure on the resource block set associated with the index identifier in the resource pool corresponding to the resource pool identifier, the second bit is set to the first value, indicating that the resource block set associated with the index identifier corresponding to the second bit in the resource pool corresponding to the resource pool identifier triggers the SL consistent LBT failure and the triggered SL consistent LBT failure has not been canceled.

In an embodiment of the present disclosure, in the case where the second bit can be used to indicate the state of SL consistent LBT failure on the resource block set associated with the index identifier in the resource pool corresponding to the resource pool identifier, the second bit is set to the second value, indicating that the resource block set associated with the index identifier corresponding to the second bit in the resource pool corresponding to the resource pool identifier has not triggered the SL consistent LBT failure, or indicating that the resource block set associated with the index identifier corresponding to the second bit in the resource pool corresponding to the resource pool identifier has triggered the SL consistent LBT failure and the triggered SL consistent LBT failure has been canceled.

In some embodiments, the first value may be "1" and the second value may be "0".

In some embodiments, the first value may be "0" and the second value may be "1".

In some embodiments, the MAC CE includes the indication information, and the indication information indicates the state of SL consistent LBT failure on at least one resource block set in the resource pool corresponding to the resource pool identifier.

In some embodiments, the second bit length/second bitmap length associated with a resource pool identifier depends on the maximum number of resource block sets that can be configured by the terminal in a resource pool.

For example, if the terminal can configure less than or equal to 8 resource block sets in a resource pool, the second bit length/second bitmap length associated with a resource pool is 1 byte; if the terminal can configure more than 8 and less than or equal to 16 resource block sets in a resource pool, the second bit length/second bitmap length associated with a resource pool is 2 bytes; if the terminal can configure more than 16 and less than or equal to 24 resource block sets in a resource pool, the second bit length/second bitmap length associated with a resource pool is 3 bytes; if the terminal can configure more than 24 and less than or equal to 32 resource block sets in a resource pool, the second bit length/second bitmap length associated with a resource pool is 4 bytes.

For example, as shown in FIG. 7, if the terminal can configure up to 8 resource pools, and a resource pool can configure up to 8 resource block sets, the resource pool identifier is 3 bits, and the second bit length/second bitmap length associated with a resource pool identifier is 8 bits. The extra bits are reserved with R bits to ensure alignment of 8 bits.

For example, as shown in FIG. 8, if the terminal can configure up to 8 resource pools, and a resource pool can configure up to 5 resource block sets, then the resource pool identifier is 3 bits, and the second bit length/second bitmap length associated with a resource pool identifier is 5 bits.

It should be noted that the above examples are only for illustration purposes and do not serve as specific limitations on the embodiments of the present disclosure. The format of the MAC CE may also be in other forms.

In this embodiment or implementation, various steps can be executed independently, arbitrarily combined, or exchanged in order without contradiction. Optional implementations or examples can be arbitrarily combined and can be combined with other embodiments or implementations in any way.

By implementing this embodiment of the present disclosure, the network device receives the indication information sent by the terminal, wherein the indication information indicates the state of the SL consistent LBT failure on the physical resource. Thus, it can support the terminal to report the state of the SL consistent LBT failure on the physical resource.

For the convenience of understanding the embodiments of the present disclosure, the following illustrative embodiments are provided.

In the illustrative embodiment, the state of SL consistent LBT failure on a certain RB set/resource pool is directly indicated by a bitmap.

In some embodiments, the detection granularity of consistent LBT failure is RB set, and the RB set belonging to the unlicensed carrier has a unique index.

In some embodiments, different RB sets have different indices.

In some embodiments, RSi indicates whether the RB set associated with RSi triggers SL consistent LBT failure, wherein 1 indicates that the RB set associated with RSi triggers the SL consistent LBT failure, and 0 indicates that the RB set associated with RSi does not trigger the consistent LBT failure, and specifically, the RB set associated with RSi may be an RB set with an RB set index of i.

In some embodiments, the bit length/bitmap length of the MAC CE depends on the maximum identifier of the RB set that detects the consistent LBT failure.

In some embodiments, if a maximum of 32 RB sets are supported, two formats are defined. If the maximum identifier of the RB set that detects the consistent LBT failure is less than 8, the bit length/bitmap length is 1 byte. Otherwise, the bit length/bitmap length is 4 bytes.

In some embodiments, the bit length/bitmap length of the MAC CE depends on the maximum number of supported RB sets. If a maximum of 8 RB sets are supported, the bit length/bitmap length is 1 byte. If a maximum of 16 RB sets are supported, the bit length/bitmap length is 2 bytes (as shown in FIG. 5). If a maximum of 32 RB sets are supported, the bit length/bitmap length is 4 bytes. There is no specific limit on how many RB sets can be supported.

In some embodiments, the detection granularity of continuous LBT failure is a resource pool, and resource pools belonging to unlicensed carriers have unique indices.

In some embodiments, Ri indicates whether the resource pool associated with Ri triggers SL continuous LBT failure, wherein 1 indicates that the resource pool associated with RSi triggers the SL consistent LBT failure, and 0 indicates that the resource pool associated with RSi does not trigger the consistent LBT failure, and specifically, the resource pool associated with RSi may be a resource pool with a resource pool index of i.

In some embodiments, the bit length/bitmap length of the MAC CE depends on the maximum identifier of the resource pool that detects the consistent LBT failure. If the maximum identifier of the resource pool that detects the consistent LBT failure is less than 8, the bit length/bitmap length is 1 byte.

In some embodiments, the bit length/bitmap length of the MAC CE depends on the number of resource pools. If a maximum of 8 resource pools are supported, the bit length/bitmap length is 1 byte. If a maximum of 16 resource pools are supported, the bit length/bitmap length is 2 bytes (as shown in FIG. 6). If a maximum of 32 resource pools are supported, the bit length/bitmap length is 4 bytes. There is no specific limit on how many RB sets can be supported.

In some embodiments, the state of SL continuous LBT failure on a certain RB set is indicated by a bitmap and a resource pool identifier.

In some embodiments, the detection granularity of continuous LBT failure is RB set, and RB sets in different resource pools belong to the unlicensed carriers have unique indices in their respective resource pools. This means that different RB sets on the same resource pool have different indices, but different RB sets on different resource pools may have the same index. The state of SL continuous LBT failure on a certain RB set is indicated through the resource pool identifier and bitmap.

In some embodiments, RSi is used to indicate whether the RB set associated with RSi on the resource pool associated with the resource pool index triggers SL continuous LBT failure. 1 indicates that the RB set associated with RSi triggers SL continuous LBT failure, and 0 indicates that the RB set associated with RSi does not trigger continuous LBT failure.

In some embodiments, the size of i depends on the maximum number of RB sets on a resource pool, without limitation, and the resource pool identifier depends on the maximum number of resource pools on the carrier, without limitation. For example, if a maximum of 8 resource pools are supported, the resource pool identifier is 3 bits. The resource pool supports up to 8 RB sets, with a bit length/bitmap length of 8 bits. Any extra bits are reserved using Rbit to ensure alignment of 8 bits (as shown in FIG. 7).

For example, if a maximum of 8 resource pools are supported, the resource pool identifier is 3 bits. The resource pool supports up to 5 RB sets, and the bit length/bitmap length is 5 bits (as shown in FIG. 8). There may be other implementations, which is not specifically limited.

In the above embodiments provided in this disclosure, the methods provided in this disclosure are introduced from the perspectives of terminal and network device, respectively.

Please refer to FIG. 10, which is a block diagram of terminal 1 provided in an embodiment of the present disclosure. The terminal 1 shown in FIG. 10 may include a transceiver module 11 and a processing module. The transceiver module may include a sending module and/or a receiving module. The sending module is configured to implement the sending function, the receiving module is configured to implement the receiving function, and the transceiver module can implement the sending function and/or receiving function.

The terminal 1 includes the transceiver module 11.

The transceiver module 11 is configured to send indication information to a network device, wherein the indication information indicates a state of a sidelink (SL) consistent listen before talk (LBT) failure on a physical resource.

In some embodiments, the transceiver module 11 is further configured to send a media access control-control element (MAC CE) to the network device, wherein the MAC CE includes the indication information.

In some embodiments, the physical resource includes a resource block set, and the indication information indicates a state of the SL consistent LBT failure on at least one resource block set.

In some embodiments, the indication information includes a first bitmap, and the first bitmap includes a first bit; the first bit corresponds to the resource block set; or the first bit corresponds to an index identifier associated with the resource block set, and different resource block sets correspond to different index identifiers.

In some embodiments, the first bit is set to a first value, indicating that a state of a consistent LBT failure on the resource block set corresponding to the first bit is a first state, wherein the first state refers to a state where the SL consistent LBT failure is triggered and the SL consistent LBT failure triggered has not been canceled; or the first bit is set to a second value, indicating that a state of a consistent LBT failure on the resource block set corresponding to the first bit is a second state, wherein the second state refers to a state where the SL consistent LBT failure is not triggered, or the SL consistent LBT failure is trigged and the SL consistent LBT failure triggered has been canceled.

In some embodiments, the indication information includes a second bitmap and a resource pool identifier, and the second bitmap includes a second bit;
the second bit corresponds to a resource block set in a resource pool corresponding to the resource pool identifier; or
the second bit corresponds to an index identifier associated with a resource block set in the resource pool, and different resource block sets in the same resource pool correspond to different index identifiers.

In some embodiments, the second bit is set to a first value, indicating that in the resource pool, a state of a consistent LBT failure on the resource block set corresponding to the second bit is a third state, wherein the third state refers to a state where the SL consistent LBT failure is triggered and the SL consistent LBT failure triggered has not been canceled; or the second bit is set to a second value, indicating that in the resource pool, a state of a consistent LBT failure on the resource block set corresponding to the second bit is a fourth state, wherein the fourth state refers to a state where the SL consistent LBT failure is not triggered, or the SL consistent LBT failure is trigged and the SL consistent LBT failure triggered has been canceled.

Regarding the terminal 1 in the above embodiments, the specific ways in which each module performs operations have been described in detail in the relevant embodiments of the method, and will not be elaborated here.

The terminal 1 provided in the above embodiments of the present disclosure achieves the same or similar beneficial effects as the information sending method provided in some of the above embodiments, and will not be repeated here.

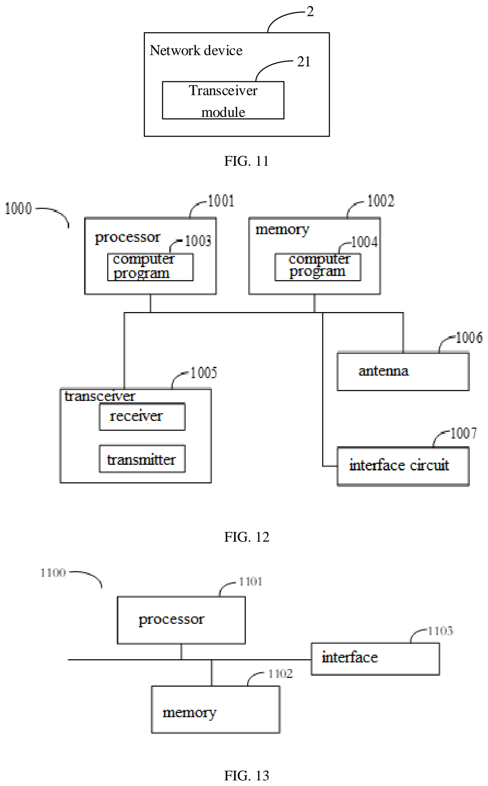

Please refer to FIG. 11, which is a block diagram of a network device 2 provided in an embodiment of the present disclosure. The network device 2 shown in FIG. 11 may include a transceiver module 21 and a processing module. The transceiver module may include a sending module and/or a receiving module. The sending module is configured to implement the sending function, the receiving module is configured to implement the receiving function, and the transceiver module can implement the sending function and/or receiving function.

The network device 2 includes the transceiver module 21.

The transceiver module 21 is configured to receive indication information sent by a terminal, wherein the indication information indicates a state of a sidelink (SL) consistent listen before talk (LBT) failure on a physical resource.

In some embodiments, the transceiver module 21 is further configured to receive a MAC CE sent by the terminal, wherein the MAC CE includes the indication information.

In some embodiments, the physical resource includes a resource block set, and the indication information indicates a state of the SL consistent LBT failure on at least one resource block set.

In some embodiments, the indication information includes a first bitmap, and the first bitmap includes a first bit; the first bit corresponds to the resource block set; or the first bit corresponds to an index identifier associated with the resource block set, and different resource block sets correspond to different index identifiers.

In some embodiments, the first bit is set to a first value, indicating that a state of a consistent LBT failure on the resource block set corresponding to the first bit is a first state, wherein the first state refers to a state where the SL consistent LBT failure is triggered and the SL consistent LBT failure triggered has not been canceled; or the first bit is set to a second value, indicating that a state of a consistent LBT failure on the resource block set corresponding to the first bit is a second state, wherein the second state refers to a state where the SL consistent LBT failure is not triggered, or the SL consistent LBT failure is trigged and the SL consistent LBT failure triggered has been canceled.

In some embodiments, the indication information includes a second bitmap and a resource pool identifier, and the second bitmap includes a second bit; the second bit corresponds to a resource block set in a resource pool corresponding to the resource pool identifier; or the second bit corresponds to an index identifier associated with a resource block set in the resource pool, and different resource block sets in the same resource pool correspond to different index identifiers.

In some embodiments, the second bit is set to a first value, indicating that in the resource pool, a state of a consistent LBT failure on the resource block set corresponding to the second bit is a third state, wherein the third state refers to a state where the SL consistent LBT failure is triggered and the SL consistent LBT failure triggered has not been canceled; or the second bit is set to a second value, indicating that in the resource pool, a state of a consistent LBT failure on the resource block set corresponding to the second bit is a fourth state, wherein the fourth state refers to a state where the SL consistent LBT failure is not triggered, or the SL consistent LBT failure is trigged and the SL consistent LBT failure triggered has been canceled.

Regarding the network device 2 in the above embodiments, the specific ways in which each module performs operations have been described in detail in the relevant embodiments of the method, and will not be elaborated here.

The network device 2 provided in the above embodiments of the present disclosure achieves the same or similar beneficial effects as the information sending method provided in some of the above embodiments, and will not be repeated here.

Please refer to FIG. 12, which is a block diagram of a communication device 1000 provided in an embodiment of the present disclosure. The communication device 1000 may be a terminal, or a network device, or a chip, chip system, or processor that supports the terminal to implement the above methods, or a chip, chip system, or processor that supports the network device to implement the above methods. The communication device 1000 can be used to implement the method described in the above method embodiments. For details, please refer to the description in the above method embodiments.

The communication device 1000 may include one or more processors 1001. The processor 1001 may be a general-purpose processor or a dedicated processor, etc. For example, it may be a baseband processor or a central processor. The baseband processor can be used to process communication protocols and communication data, while the central processor can be used to control communication devices (such as network side devices, baseband chips, terminals, terminal chips, DU or CU, etc.), execute computer programs, and process data from computer programs.

Optionally, the communication device 1000 may also include one or more memories 1002, on which computer programs 1004 may be stored. The memory 1002 executes the computer programs 1004 to enable the communication device 1000 to perform the methods described in the above method embodiments. Optionally, the memory 1002 may also store data. The communication device 1000 and the memory 1002 can be set separately or integrated together.

Optionally, the communication device 1000 may also include a transceiver 1005 and an antenna 1006. The transceiver 1005 can be referred to as a transceiver unit, transceiver machine, or transceiver circuit, etc., used to implement the sending and receiving function. The transceiver 1005 may include a receiver and a transmitter, where the receiver can be referred to as a receiver machine or receiving circuit, etc., used to implement the receiving function; the transmitter can be referred to as a transmitter machine or a transmission circuit, etc., used to implement the sending function.

Optionally, the communication device 1000 may also include one or more interface circuits 1007. The interface circuit 1007 is configured to receive code instructions and transmit them to processor 1001. The processor 1001 executes the code instructions to cause the communication device 1000 to perform the method described in the above method embodiments.

The communication device 1000 is the terminal: the transceiver 1005 is configured to execute S41 in FIG. 4.

The communication device 1000 is the network device: the transceiver 1005 is configured to execute S91 in FIG. 9.

In an implementation, the processor 1001 may include a transceiver for implementing receiving and sending functions. For example, the transceiver may be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In an implementation, the processor 1001 may store computer program 1003, which when run on the processor 1001, enables the communication device 1000 to perform the method described in the above method embodiments. The computer program 1003 may be fixed in the processor 1001, in which case the processor 1001 may be implemented by hardware.

In an implementation, the communication device 1000 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a terminal or a network device, but the scope of the communication device described in this disclosure is not limited to this, and the structure of the communication device may not be limited by FIG. 12. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the communication device that can be a chip or chip system, please refer to FIG. 13, which is a block diagram of a chip provided in an embodiment of the present disclosure.

The chip 1100 includes processors 1101 and interfaces 1103. The number of processors 1101 can be one or more, and the number of interfaces 1103 can be multiple.

For the case where the chip is configured to implement the functions of the terminal in the embodiments of the present disclosure:
the interface 1103 is configured to receive code instructions and transmit the code instructions to the processor;
the processor 1101 is configured to run the code instructions to implement the information sending method described in some of the above embodiments.

For the case where the chip is configured to implement the functions of the network device in the embodiments of the present disclosure:
the interface 1103 is configured to receive code instructions and transmit the code instructions to the processor;
the processor 1101 is configured to run the code instructions to implement the information sending method described in some of the above embodiments.

Optionally, the chip 1100 also includes a memory 1102 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

An embodiment of the present disclosure also provides a communication system. The system includes the terminal in the embodiment shown in FIG. 10 and the network device in the embodiment shown in FIG. 11, or alternatively, the system includes the communication device as the terminal and the communication device as the network device in the embodiment shown in FIG. 12.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

Depending on the context, the words "if" and "in the case where" used here can be interpreted as "when" or "upon" or "in response to determining".

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The names of the parameters shown in titles in the above tables can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in advance, stored, pre-stored, pre-negotiated, pre-configured, solidified, or pre-fired.

Ordinary technical personnel in this field can realize that the units and algorithm steps described in combination with the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and simplicity of description, for the specific working processes of the systems, devices, and units described above reference can be made to the corresponding processes in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. An information sending method, performed by a terminal, comprising:
sending indication information to a network device, wherein the indication information indicates a state of a sidelink (SL) consistent listen before talk (LBT) failure on a physical resource.

2. The method of claim 1, wherein sending the indication information to the network device comprises:
sending a media access control-control element (MAC CE) to the network device, wherein the MAC CE comprises the indication information.

3. The method of claim 1 or 2, wherein the physical resource comprises a resource block set, and the indication information indicates a state of the SL consistent LBT failure on the resource block set.

4. The method of claim 3, wherein the indication information comprises a first bitmap, and the first bitmap comprises a first bit;
the first bit corresponds to the resource block set; or
the first bit corresponds to an index identifier associated with the resource block set, and different resource block sets correspond to different index identifiers.

5. The method of claim 4, wherein
the first bit is set to a first value, indicating that a state of a consistent LBT failure on the resource block set corresponding to the first bit is a first state, wherein the first state refers to a state where the SL consistent LBT failure is triggered and the SL consistent LBT failure triggered has not been canceled; or
the first bit is set to a second value, indicating that a state of a consistent LBT failure on the resource block set corresponding to the first bit is a second state, wherein the second state refers to a state where the SL consistent LBT failure is not triggered, or the SL consistent LBT failure is trigged and the SL consistent LBT failure triggered has been canceled.

6. The method of claim 3, wherein the indication information comprises a second bitmap and a resource pool identifier, and the second bitmap comprises a second bit;
the second bit corresponds to a resource block set in a resource pool corresponding to the resource pool identifier; or
the second bit corresponds to an index identifier associated with a resource block set in the resource pool, and different resource block sets in the same resource pool correspond to different index identifiers.

7. The method of claim 6, wherein
the second bit is set to a first value, indicating that in the resource pool, a state of a consistent LBT failure on the resource block set corresponding to the second bit is a third state, wherein the third state refers to a state where the SL consistent LBT failure is triggered and the SL consistent LBT failure triggered has not been canceled; or
the second bit is set to a second value, indicating that in the resource pool, a state of a consistent LBT failure on the resource block set corresponding to the second bit is a fourth state, wherein the fourth state refers to a state where the SL consistent LBT failure is not triggered, or the SL consistent LBT failure is trigged and the SL consistent LBT failure triggered has been canceled.

8. An information sending method, performed by a network device, comprising:
receiving indication information sent by a terminal, wherein the indication information indicates a state of a sidelink (SL) consistent listen before talk (LBT) failure on a physical resource.

9. The method of claim 8, wherein receiving the indication information sent by the terminal comprises:
receiving a media access control-control element (MAC CE) sent by the terminal, wherein the MAC CE comprises the indication information.

10. The method of claim 8 or 9, wherein the physical resource comprises a resource block set, and the indication information indicates a state of the SL consistent LBT failure on at least one resource block set.

11. The method of claim 10, wherein the indication information comprises a first bitmap, and the first bitmap comprises a first bit;
the first bit corresponds to the resource block set; or
the first bit corresponds to an index identifier associated with the resource block set, and different resource block sets correspond to different index identifiers.

12. The method of claim 11, wherein
the first bit is set to a first value, indicating that a state of a consistent LBT failure on the resource block set corresponding to the first bit is a first state, wherein the first state refers to a state where the SL consistent LBT failure is triggered and the SL consistent LBT failure triggered has not been canceled; or
the first bit is set to a second value, indicating that a state of a consistent LBT failure on the resource block set corresponding to the first bit is a second state, wherein the second state refers to a state where the SL consistent LBT failure is not triggered, or the SL consistent LBT failure is trigged and the SL consistent LBT failure triggered has been canceled.

13. The method of claim 10, wherein the indication information comprises a second bitmap and a resource pool identifier, and the second bitmap comprises a second bit;
the second bit corresponds to a resource block set in a resource pool corresponding to the resource pool identifier; or
the second bit corresponds to an index identifier associated with a resource block set in the resource pool, and different resource block sets in the same resource pool correspond to different index identifiers.

14. The method of claim 13, wherein
the second bit is set to a first value, indicating that in the resource pool, a state of a consistent LBT failure on the resource block set corresponding to the second bit is a third state, wherein the third state refers to a state where the SL consistent LBT failure is triggered and the SL consistent LBT failure triggered has not been canceled; or
the second bit is set to a second value, indicating that in the resource pool, a state of a consistent LBT failure of the resource block set corresponding to the second bit is a fourth state, wherein the fourth state refers to a state where the SL consistent LBT failure is not triggered, or the SL consistent LBT failure is trigged and the SL consistent LBT failure triggered has been canceled.

15. A terminal, comprising:
a transceiver module, configured to send indication information to a network device, wherein the indication information indicates a state of an SL consistent LBT failure on a physical resource.

16. A network device, comprising:
a transceiver module, configured to receive indication information sent by a terminal, wherein the indication information indicates a state of an SL consistent LBT failure on a physical resource.

17. A communication device, comprising a processor and a memory, wherein the memory stores a computer program, which, when executed by the processor, causes the device to implement the method according to any one of claims 1 to 7, or the method according to any one of claims 8 to 14.

18. A communication device, comprising a processor and an interface circuit, wherein
the interface circuit is configured to receive code instructions and transmit the code instructions to the processor;
the processor is configured to run the code instructions to implement the method according to any one of claims 1 to 7, or the method according to any one of claims 8 to 14.

19. A computer-readable storage medium storing instructions that, when executed, cause the method according to any one of claims 1 to 7 to be implemented, or cause the method according to any one of claims 8 to 14 to be implemented.

20. A communication system, comprising:
a terminal, configured to perform the method according to any one of claims 1 to 7; and
a network device, configured to perform the method according to any one of claims 8 to 14.
